# EUROPEAN PATENT SPECIFICATION

(11) **EP 0 348 130 B1**
(45) Date of publication and mention of the grant of the patent: **08.06.1994**
(21) Application number: 89306184.6
(22) Date of filing: 19.06.1989
(51) Int. Cl.: B64D 11/00

(54) **Safety arrangement for overhead luggage bins in aircraft passenger cabins**
Sicherheitsvorrichtung für Gepäckablagen in Passagierflugzeugkabinen
Dispositif de sécurité pour compartiment à bagages dans des cabines d'avions à passagers

(30) Priority: 22.06.1988 GB 8814865
(43) Date of publication of application: 27.12.1989
(73) Proprietor: BRIDPORT AVIATION PRODUCTS LIMITED, Dorset DT6 3QU (GB)
(72) Inventor: Ackerman, David, Nr Dorchester Dorset DT2 7DX (GB)
(74) Representative: Livsey, Gilbert Charlesworth Norris

(56) References cited:
- EP-A- 0 318 711
- DE-A- 35 971
- DE-A- 2 545 385

## Description

This invention relates to the provision of a safety arrangement for preventing articles from being accidentally or unintentionally displaced from an overhead bin for hand luggage, such as are to be found in the passenger cabin of an aircraft, such bin having the shape of a closed box, with a front door panel which lifts outwardly and upwardly to open, the front panel being hinged at or towards its upper generally horizontal edge.

When the front door panel of such a bin is opened by being raised, articles such as heavy brief cases or even bottles are liable to fall out inadvertently, causing the risk of injury to a passenger seated or standing nearby.

A secondary transparent barrier for a luggage locker having the shape of a closed box is known from DE-A 2 545 385 in which a single transparent secondary barrier located behind a main locker door opens to uncover the load space by moving outwardly and downwardly, the secondary barrier and the main locker door each having separate catch means, whereby after the main locker door has been opened the secondary barrier requires deliberate unlocking of its catch means before it can be opened. In DE-A 0 318 711 (published 7th June 1989 and thus falling under Article 54(3)EPC), behind the main, upwardly opening door panel of a luggage bin, there is a single safety barrier of transparent material which masks a part of the opening to the bin. When closed this tends to prevent articles in the upper part of the bin from falling out. This barrier opens upwardly and outwardly, and a spring device, operating on the over-centre principle, biasses the barrier, tending to hold it, but not lock it, in each of its open and closed positions.

A viable alternative is now proposed and accordingly, this invention provides an overhead luggage bin for use in the cabin of an aircraft as defined in claim 1. Further advantageous features of the bin are defined in the subsidiary claims.

Usually, such a bin is some 1500 mm in width and some 500 mm in height, its opening therefore being relatively large. In such a case the visor will be in two parts, each part covering half of the bin opening. With larger bins the visor may be in three of more parts, with each part-visor covering only a proportion of the width of the bin opening. However, in each case, when the visor is closed substantially and full width of the opening will be covered by the visor or visors such as to prevent objects from inadvertently falling out, while still allowing the objects so retained to be seen through the visor or visors.

Each part-visor will advantageously comprise a generally rectangular frame of lightweight composite plastics material resistant to combustion. This frame will define "see-through" openings, typically occupied by a netting which is also of material resistant to combustion. Polypropylene may be employed as the netting.

Advantageously each part-visor will have catch means at its lower edge engaging a keep in the bin proper located just behind the sill of the front opening of the bin. Such catch means will be self-latching when the part-visor is closing.

Each part-visor may be hinged to the roof of the bin, again just behind the bin opening at its upper edge. However preferably, each part-visor and the bin door panel are both pivotal about a common axis.

Each part-visor will be assisted during its upward opening movement when it pivots about its hinge, and suitably one or more small gas springs may be provided for this purpose; although any other type of spring(s) could be used.

When such spring assistance is employed, each part- visor when open may lie, urged by the spring(s), against the raised front panel. And when the latter is pulled down to its closed position, the part-visor will be lowered, pushed by the front panel of the bin; and each part-visor is arranged to lock down, with its catch being self-latching to become engaged behind the keep fixed to the bin sill, by the action of pulling down and closing the front main door panel of the bin.

One embodiment of the invention is illustrated by way of example in the accompanying drawings. Each drawing shows an aircraft cabin luggage bin in a perspective view, Figures 1 and 2 showing the bin with its main front door closed and opened respectively, while Figure 3 shows one-part visor opened behind the already opened main door.

In the luggage bin illustrated, the visor 10 has two parts 11 and 12 each disposed behind the front door panel 1 of the bin which is generally designated 2. Each part-visor is pivotal upwardly about a hinge in the bin roof. Preferably, the two part-visors and the single bin door panel are pivotal on a common axis.

Each part-visor 11 or 12 has its own catch 13 at its lower edge, the catch engaging behind a keep 14, fixed to the lower edge of the bin just inside its front opening.

Not shown are helper springs which are provided to assist each part-visor towards its fully open position.

Each part-visor preferably comprises a generally rectangular frame of lightweight composite plastics material resistant to combustion. This frame defines "see-through" openings, occupied by a transparent material such as netting which is also of material resistant to combustion. Polypropylene may be employed as the transparent netting.

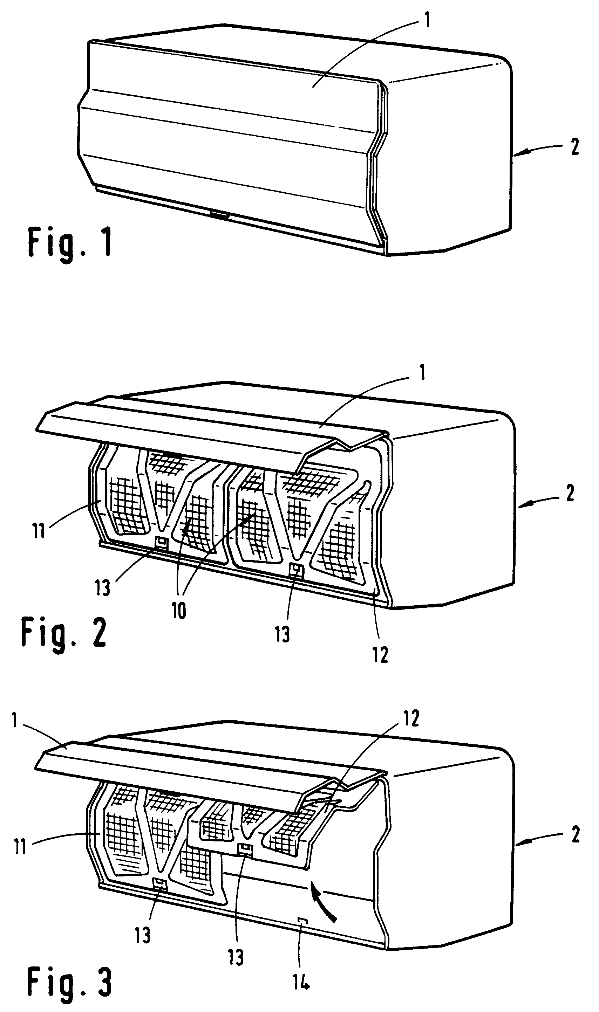

It will be noted from Figure 2, that when the front door panel 1 of the bin is opened, each part-visor remains closed at first. In this condition the contents of the bin can be seen through the net like areas of the part-visors. Each part-visor can only be opened and raised following a deliberate unlatching of its catch.

Each part-visor is closed, with its catch 13 being self-latching to become engaged behind the keep 14 in the bin floor, and such closing of each part-visor may be effected by fully lowering the bin door panel 1.

It will be appreciated that the provision of a plurality of part-visors, each locked by its catch, behind a closed front main door panel, locked by its own catch, provides added security for heavy articles stowed in the bins when the bins are closed during flight.

## Claims

1. An aircraft cabin luggage bin having the shape of a closed box and with a front door panel which lifts to open, the front panel being hinged at a location adjacent its upper generally horizontal edge, a second upwardly and outwardly pivoting visor means being provided behind the upwardly and outwardly pivoting front door panel of such a bin; said bin having the following features in combination
a) firstly, the visor means is constituted by two or more upwardly and outwardly opening hinged part-visors (11, 12) located side by side to extend over substantially the full width of the opening uncovered by the lift-up front door panel (1) of the bin;
b) secondly, each part-visor has at its lower edge, catch means (13) which require to be released by hand, before the part-visor can be raised, each said catch means being lockingly engageable with keep means (14) on the bin and being self-latching when the part-visor is closing; and said catch means of the part-visors being separate from catch means on the main bin door (1) which in per se known manner, locks with keep means on the bin when said main door is closing;
c) thirdly, each part-visor is formed, over the major part of its area, of material which is transparent and enables objects stowed away behind each said part-visor to be seen; and
d) fourthly, each said part-visor is assisted by spring means during its upward and outward movement towards its fully open position;
the arrangement being such that after the main bin door (1) has been opened and raised following unlocking of its catch means, each part-visor (11, 12) can only be opened following a deliberate unlocking of its catch means.

2. A bin according to claim 1 and in which each part-visor has catch means (13) at its lower edge engaging a keep (14) in the bin proper located just behind the sill of the front opening of the bin.

3. A bin according to either of claims 1 or 2 and in which each part-visor (11,12) is comprised of a generally rectangular frame of lightweight composite plastics material resistant to combustion, this frame defining "see-through" openings, and with transparency of the part-visor being achieved by means of reticulated or net-like material which covers said openings.

4. A bin according to any one of claims 1 to 3, and in which each part-visor (11,12) is hinged to the roof of the bin.

5. A bin according to any one of claims 1 to 4, and in which each part-visor (11,12) and the bin door panel (1) are both pivotal about a common axis.

6. A bin according to any one of claims 1 to 5, and in which at least one gas spring is arranged to assist upward opening movement of each part-visor (11,12).

7. A bin according to any one of claims 1 to 6, and in which each part-vizor (11,12) is arranged to lie against the front door panel (1) when both are fully open.

8. A bin according to any one of claims 1 to 7, and in which each part-visor (11,12) can be closed and locked by fully closing the main bin door panel (1).

## Patentansprüche

1. Eine Flugzeugkabinen-Gepäckablage in Form eines geschlossenen Gehäuses mit einer Frontplattenklappe, die durch Anheben geöffnet wird, wobei die Frontplatte an einer Stelle in der Nähe ihrer oberen, im allgemeinen horizontalen Kante angelenkt ist und einem zweiten nach oben und außen schwenkbaren Abdeckmittel, das hinter der nach oben und außen schwenkbaren Frontplattenklappe einer derartigen Ablage angeordnet ist; wobei die besagte Ablage die folgenden Merkmale in Kombination aufweist:
a) erstens, das Abdeckmittel ist aus zwei oder mehreren nach oben und außen öffnenden, angelenkten Teilabdeckungen (11, 12) aufgebaut, die nebeneinander angeordnet sind, um sich über im wesentlichen die volle Breite der von der angehobenen Frontplattenklappe (1) der Ablage unbedeckten Öffnung zu erstrecken;
b) zweitens, jede Teilabdeckung besitzt an ihrer unteren Kante Einrastmittel (13), die von Hand gelöst werden müssen, bevor die Teilabdeckung angehoben werden kann, wobei jedes der besagten Einrastmittel verriegelnd in an der Ablage angeordnete Haltemittel (14) eingreift und von selbst einschnappt, wenn die Teilabdeckung geschlossen wird; und die besagten Einrastmittel der Teilabdeckungen sind getrennt von Einrastmitteln an der Hauptablageklappe (1), die in an sich bekannter Weise in Haltemittel an der Ablage eingreifen, wenn die besagte Hauptklappe geschlossen wird;
c) drittens, jede Teilabdeckung besteht über den Haupteil ihrer Fläche aus einem Material, das transparent ist und es ermöglicht, daß Gegenstände, die hinter jeder der besagten Teilabdeckungen verstaut sind, gesehen werden können; und
d) viertens, jede besagte Teilabdeckung wird während ihrer Bewegung nach oben und außen durch Federmittel in Richtung auf die vollständig geöffnete Stellung unterstützt;
wobei die Anordnung derart ist, daß, nachdem die Hauptablageklappe (1) nach dem Entriegeln ihrer Einrastmittel geöffnet und angehoben worden ist, jede Teilabdeckung (11, 12) nur nach einem absichtlichen Entriegeln ihres Einrastmittels geöffnet werden kann.

2. Eine Ablage nach Anspruch 1, bei welcher jede Teilabdeckung an ihrer unteren Kante Einrastmittel (13) aufweist, die in eine Halterung (14) eingreifen, welche in geeigneter Weise direkt hinter der Schwelle der Frontöffnung der Ablage angeordnet ist.

3. Eine Ablage nach Anspruch 1 oder 2, bei welcher jede Teilabdeckung (11, 12) einen im allgemeinen rechteckigen Rahmen aus nichtbrennbarem Leichtverbund-Kunststoffmaterial aufweist, wobei dieser Rahmen "Durchsichts"-Öffnungen begrenzt und die Transparenz der Teilabdeckung mittels eines retikularen oder netzartigen Materials erreicht wird, das die besagten Öffnungen überdeckt.

4. Eine Ablage nach einem der Ansprüche 1 bis 3, bei welcher jede Teilabdeckung (11, 12) am Dach der Ablage angelenkt ist.

5. Eine Ablage nach einem der Ansprüche 1 bis 4, bei welcher jede Teilabdeckung (11, 12) und die Ablagenplattenklappe (1) um eine gemeinsame Achse schwenkbar sind.

6. Eine Ablage nach einem der Ansprüche 1 bis 5, bei welcher mindestens eine Gasfeder so angeordnet ist, daß sie die Öffnungsbewegung jeder Teilabdeckung (11, 12) nach oben unterstützt.

7. Eine Ablage nach einem der Ansprüche 1 bis 6, bei welcher jede Teilabdeckung (11, 12) so angeordnet ist, daß sie an der Frontplattenklappe (1) anliegt, wenn beide vollständig geöffnet sind.

8. Eine Ablage nach einem der Ansprüche 1 bis 7, bei welcher jede Teilabdeckung (11, 12) durch das vollständige Schließen der Hauptablagenklappe (1) geschlossen und verriegelt werden kann.

## Revendications

1. Un compartiment à bagages de cabine d'avion ayant la forme d'une boîte fermée et comportant un volet avant qui se soulève pour s'ouvrir, ce volet avant étant articulé à un emplacement adjacent à son bord supérieur d'orientation générale horizontale, dans lequel une seconde structure de visière, pivotant vers le haut et vers l'extérieur, est placée derrière le panneau avant, pivotant vers le haut et vers l'extérieur, d'un tel compartiment; ce compartiment ayant les caractéristiques suivantes, en combinaison :
a) premièrement, la structure de visière set formée par su moins deux visières partielles (11, 12) montées sur charnières et s'ouvrant vers le haut et vers l'extérieur, qui sont disposées côte à côte de façon à s'étendre sur la quasi-totalité de la largeur de l'ouverture qui est découverte par le volet avant (1) du compartiment, lorsque ce volet est soulevé;
b) secondement, chaque visière partielle comporte à son bord inférieur des moyens de verrouillage (13) qui exigent d'être déverrouillés manuellement, avant que la visière partielle ne puisse être soulevée, les moyens de verrouillage respectifs pouvant se verrouiller avec des moyens de retenue (14) dans le compartiment, et ce verrouillant automatiquement lorsque la visière partielle se ferme; et les moyens de verrouillage des visières partielles étant séparés des moyens de verrouillage qui se trouvent sur le volet principal (1) du compartiment et qui se verrouillent, d'une manière connue en elle-même, avec des moyens de retenue dans le compartiment, lorsque le volet principal se ferme;
c) troisièmement, chaque visière partielle est formée, sur la majeure partie de son étendue, par une matière qui est transparente et permet de voir des objets qui sont rangés derrière chaque visière partielle; et
d) quatrièmement, chaque visière partielle est assistée par des moyens à ressort pendant son mouvement vers le haut et vers l'extérieur, en direction de sa position complètement ouverte;
la configuration étant telle qu'après que le volet principal (1) du compartiment a été ouvert et soulevé, à la suite du déverrouillage de ses moyens de verrouillage, chaque visière partielle (11, 12) ne peut être ouverte qu'après un déverrouillage délibéré de ses moyens de verrouillage.

2. Un compartiment selon la revendication 1 et dans lequel chaque visière partielle comporte des moyens de verrouillage (13) à son bord inférieur se verrouillant avec un élément de retenue (14) dans le compartiment proprement dit, qui se trouve juste derrière le seuil de l'ouverture avant du compartiment

3. Un compartiment selon l'une quelconque des revendications 1 ou 2, et dans lequel chaque visière partielle (11, 12) est constituée par un châssis de forme générale rectangulaire en une matière plastique composite légère résistant à la combustion, ce châssis définissant des ouvertures qui permettent de voir à travers, et la transparence de la visière partielle étant obtenue au moyen d'une matière réticulée ou semblable à un filet qui couvre les ouvertures précitées.

4. Un compartiment selon l'une quelconque des revendications 1 à 3, et dans lequel chaque visière partielle (11, 12) est montée au moyen de charnières sur le toit du compartiment.

5. Un compartiment selon l'une quelconque des revendications 1 à 4, et dans lequel chaque visière partielle (11, 12) et le volet (1) du compartiment peuvent pivoter autour d'un axe commun.

6. Un compartiment selon l'une quelconque des revendications 1 à 5, et dans lequel au moins un ressort à gaz est incorporé pour assister le mouvement d'ouverture vers le haut de chaque visière partielle (11, 12).

7. Un compartiment selon l'une quelconque des revendications 1 à 6, et dans lequel chaque visière partielle (11, 12) est conçue de façon à s'étendre contre le volet avant (1) lorsque les deux sont entièrement ouverts.

8. Un compartiment selon l'une quelconque des revendications 1 à 7, et dans lequel chaque visière partielle (11, 12) peut être fermée et verrouillée par la fermeture complète du volet principal (1) du compartiment.
